# FASCICULE DE BREVET EUROPEEN

(11) **EP 3 240 685 B1**
(45) Date de publication et mention de la délivrance du brevet: **14.08.2024**
(21) Numéro de dépôt: 15830818.9
(22) Date de dépôt: 21.12.2015
(51) Int. Cl.: B32B 17/10

(54) **UTILISATION D'UN VITRAGE FEUILLETÉ À FEUILE DE VERRE MINCE COMME VITRAGE ANTI-ÉCLAT ET ANTIFUMÉE**
VERWENDUNG EINES VERBUNDGLASES MIT DÜNNER GLASSCHEIBE ALS SPLITTERSCHUTZ- UND RAUCHHEMMENDE VERGLASUNG
USE OF A LAMINATED GLASS WITH THIN GLASS SHEET AS SHATTER-PROOF AND SMOKE-PROOF GLAZING

(30) Priorité: 29.12.2014 FR 1463375
(43) Date de publication de la demande: 08.11.2017
(73) Titulaire: SAINT-GOBAIN GLASS FRANCE, 92400 Courbevoie (FR)
(72) Inventeur: CHAUSSADE, Pierre, 45100 Orleans (FR); DAUDIFFRET, Stéphane, 45000 Orleans (FR); LUBIN, Benoît, 45570 Ouzouer Sur Loire (FR); ROUBY, Michel, 45460 Bray En Val (FR)
(74) Mandataire: Saint-Gobain Recherche
(86) Numéro de dépôt international: PCT/FR2015/053683
(87) Numéro de publication internationale: WO 2016/108005

(56) Documents cités:
- WO-A1-03/068501
- WO-A1-2013/184897
- WO-A1-2014/029605
- CN-Y- 200 978 253
- FR-A1- 2 632 950
- US-A- 4 595 624
- US-A- 4 668 574
- US-A1- 2013 295 357
- ALEXANDER ET AL: "An improved windshield", vol. 79, 1 February 1970 (1970-02-01), pages 1699 - 1707, XP009535925, ISSN: 0148-7191, Retrieved from the Internet <URL:https://www.jstor.org/stable/44716201> DOI: 10.4271/700482

## Description

La présente invention est relative à la fonction anti-éclat des vitrages, notamment feuilletés. Il s'agit de l'aptitude d'un vitrage à absorber l'impact d'un projectile sans qu'il ne produise, du côté opposé à l'impact, de projection d'éclats potentiellement vulnérants pour des utilisateurs proches.

Sont particulièrement concernés les vitrages frontaux de véhicules de transport terrestre, aérien mais aussi aquatique, ainsi que les vitrages de bâtiments. La fonctionnalité anti-éclat est recherchée à un degré d'autant plus élevé que la vitesse du vitrage est élevée, comme pour les pare-brise de train à grande vitesse ou d'avion...

A l'heure actuelle, la fonction anti-éclat est procurée par le fait que la face arrière du vitrage, orientée du côté opposé à celui de l'impact attendu, c'est-à-dire vers l'intérieur de l'habitacle ou du bâtiment, est constituée d'une feuille de poly(téréphtalate d'éthylène) revêtue d'un vernis anti-rayure de type polysiloxane (CPET pour Coated Poly Ethylene Terephtalate) ou de polycarbonate (PC).

Ces matériaux polymères sont susceptibles de prendre feu en dégageant des fumées plus ou moins toxiques. Ils ne sont donc pas qualifiés feu-fumée, mais néanmoins autorisés à titre de dérogation selon la norme EN 45 545 - 2, version d'avril 2013, section 4.7, jusqu'au développement d'un matériau à la fois qualifié feu-fumée et anti-éclat.

De plus, le CPET ne peut pas être assemblé dans un feuilleté à double courbure (courbure sphérique) prononcée ou importante.

Le document US 4 595 624 A décrit l'utilisation d'un verre renforcé chimiquement de 1,5 mm en face arrière d'un feuilleté pour la fonction anti-éclat, mais ni une utilisation pour train grande vitesse, ni la réalisation de la fonction anti-éclat pour un vitrage à 160 km/h ou plus.

L'invention a eu pour objectif d'élaborer une solution anti-éclat qualifiée feu-fumée et compatible avec une courbure sphérique.

Ce but est atteint par l'invention exposée dans le jeu de revendications joint.

On entend par verre, au sens de l'invention, tout type de verre minéral tel que sodocalcique flotté renforcé chimiquement ou non, aluminosilicate renforcé chimiquement ou non, avec ou sans alcalins, borosilicate, aluminoborosilicate...

Ladite seconde feuille de verre, relativement mince, est destinée à former la face arrière du vitrage, c'est-à-dire orientée vers l'intérieur de l'habitacle ou du bâtiment, la face opposée à celle susceptible de recevoir un impact. Le module de rupture en flexion de ladite seconde feuille de verre a des valeurs élevées du même ordre que celles citées précédemment pour sa contrainte de surface : en cas de choc, la casse de cette seconde feuille de verre est retardée. Elle se casse ensuite en petits morceaux ou éclats non vulnérants, notamment eu égard à sa minceur et à la contrainte d'extension à coeur, élevée; ces petits éclats restent collés sur le second intercalaire adhésif. Lorsqu'un projectile vient frapper le vitrage, il est empoché dans ledit second intercalaire adhésif, mais ne le perfore pas.

Le verre mince est qualifié feu-fumée, il peut être de géométrie à courbure sphérique.

Selon d'autres caractéristiques préférées du vitrage feuilleté de l'invention :
- ledit second intercalaire adhésif a une épaisseur, par ordre de préférence croissant, au plus égale à 6 et 5 mm ;
- il comprend une seule dite première feuille de verre d'épaisseur au plus égale à 12, de préférence à 10 mm, constituée de verre sodocalcique trempé thermique ou de verre sodocalcique, respectivement d'aluminosilicate renforcés chimiquement ayant une contrainte de surface comprise entre 200 et 500, respectivement 300 et 1000 MPa et une profondeur en compression entre 20 et 100 µm dans les deux cas; pour le verre trempé thermique, on peut citer des valeurs de contrainte de surface au plus égales à 65 MPa, par exemple ;
- il comprend au moins deux dites premières feuilles de verre constituées indépendamment l'une de l'autre de verre sodocalcique trempé thermique, ou renforcé chimiquement ayant une contrainte de surface comprise entre 200 et 500 MPa et une profondeur en compression entre 20 et 100 µm, ou ni l'un ni l'autre, ou d'aluminosilicate renforcé chimiquement ayant une contrainte de surface comprise entre 300 et 1000 MPa et une profondeur en compression entre 20 et 100 µm , ou non renforcé chimiquement ;
- dans le cas où lesdites premières feuilles de verre sont au moins deux, leur épaisseur est au plus égale à 12 mm ;
- le ou lesdit(s) premier(s) intercalaire(s) adhésif(s) a(ont) une(des) épaisseur(s) comprise(s) entre 0,7 et 8, de préférence au moins égale(s) à 1 et au plus égale(s) à 7 mm ;
- la face orientée vers ladite seconde feuille de verre de l'une au moins desdites deux premières feuilles de verre les plus éloignées de ladite seconde feuille de verre porte une couche chauffante ; un exemple en est une couche de 200 nm d'épaisseur d' oxyde d'indium-étain (ou encore oxyde d'indium dopé à l'étain ou ITO pour l'appellation anglaise : Indium Tin Oxide), qui est un oxyde mixte ou un mélange obtenu à partir des oxydes d'indium(III) (In₂O₃) et d'étain (IV) (SnO₂), de préférence dans les proportions massiques comprises entre 70 et 95% pour le premier oxyde et 5 à 20% pour le second oxyde ; une proportion massique typique est d'environ 90 % massique d'In₂O₃ pour environ 10 % massique de SnO₂.

L'objet de l'invention consiste en
- l'utilisation d'un vitrage feuilleté tel que décrit ci-dessus pour ne pas produire de projection d'éclats vulnérants du côté de ladite seconde feuille de verre en cas d'impact du côté du vitrage feuilleté opposé à celle-ci ; et
- l'utilisation de ce vitrage feuilleté pour ne pas produire de fumée du côté de ladite seconde feuille de verre en cas de feu de ce côté du vitrage feuilleté ; et
- une telle utilisation comme vitrage de véhicule de transport terrestre, aérien ou aquatique, dont la face formée de ladite seconde feuille de verre est celle qui est orientée vers l'intérieur du véhicule, notamment comme vitrage aéronautique ou pare-brise de train ; ou
- une telle utilisation comme vitrage de bâtiment, dont la face formée de ladite seconde feuille de verre est celle qui est orientée vers l'intérieur du bâtiment.

L'invention sera mieux comprise à la lumière des exemples suivants.

### Exemple 1

Un vitrage feuilleté est constitué d'une feuille de verre flotté silicosodocalcique renforcé chimiquement au sens défini ci-dessus (c'est-à-dire ayant une contrainte de surface comprise entre 200 et 500 MPa et une profondeur en compression entre 20 et 100 µm), de 3 mm d'épaisseur et d'une autre feuille du même matériau renforcé chimiquement mais de 0,8 mm d'épaisseur, collées l'une à l'autre par une couche de polyuréthane thermoplastique (TPU) ou de polyvinylbutyral (PVB) de 2 à 5 mm d'épaisseur.

La face de la feuille de verre renforcé chimique de 3 mm d'épaisseur orientée vers l'autre feuille de verre est revêtue d'une couche de 200 nm d'épaisseur d'oxyde d'indium-étain (ITO).

Un impact sur la face du vitrage formée de la feuille de verre la plus épaisse ne produit pas d'éclats vulnérants du côté de l'autre face du vitrage. Les produits du bris de la feuille de verre fine restent collés sur l'intercalaire adhésif.

### Exemple 2

Dans les exemples suivants seront utilisées les abréviations suivantes :
RC : verre flotté silicosodocalcique (ou éventuellement aluminosilicate pour des épaisseurs au plus égales à 3 mm) renforcé chimiquement au sens défini ci-dessus (notamment deux domaines de contrainte de surface différents dans les deux cas) ;
V : verre flotté silicosodocalcique non renforcé chimiquement, trempé thermique ou non, ou aluminosilicate non renforcé chimiquement pour des épaisseurs au plus égales à 3 mm ;
PU : polyuréthane ;
PVB : polyvinylbutyral.

On assemble le vitrage feuilleté suivant, dont l'épaisseur des constituants est indiquée ci-après en mm :
6RC/5PU/3RC/2,8PU/0,8RC

Dans cet exemple et dans les suivants on soumet le vitrage incliné selon un angle précisé par rapport à l'horizontale, au tir horizontal à une vitesse précisée, du projectile UIC selon la norme EN 15 152 : 2007 (F).

Dans cet exemple, la vitesse maximale du train est inférieure ou égale à 160 km/h, le vitrage est incliné de 75 ° par rapport à l'horizontale.

### Exemple 3 (non conforme à l'invention)

La composition du vitrage feuilleté est :
6RC/1,14PVB/3RC/4,56PU/3RC/3,3PU/0,8RC

La vitesse maximale du train est supérieure à 160 km/h et inférieure ou égale à 300 km/h, le vitrage est incliné de 40 ° par rapport à l'horizontale.

### Exemple 4 (non conforme à l'invention)

La composition du vitrage feuilleté est :
8RC/1,9PVB/6V/1,52PVB/6RC/2PU/0,8RC

La vitesse maximale du train est supérieure à 300 km/h, le vitrage est incliné de 30 ° par rapport à l'horizontale.

Dans les exemples 2 à 4 on observe que l'intercalaire adhésif collant le verre mince empoche le projectile qui ne le perfore pas. Les éclats de la feuille de verre mince restent en adhésion avec cet intercalaire adhésif (PU). Il n'y a aucune projection d'éclat de verre vulnérant provenant du bris de la feuille de 0,8 mm d'épaisseur.

La feuille de verre de 0,8 mm d'épaisseur peut être mise en forme complexe, notamment à courbure double (sphérique). Son matériau est qualifié feu-fumée, au contraire des matériaux polymères organiques.

## Revendications

1. Utilisation d'un vitrage feuilleté étant constitué de une à trois première(s) feuille(s) de verre d'épaisseur(s) comprise(s) entre 1,5 et 22 mm, le cas échéant collées les unes aux autres par un ou plusieurs premier(s) intercalaire(s) adhésif(s), et une seconde feuille de verre formant l'une des deux faces du vitrage feuilleté, d'épaisseur comprise entre 0,5 et 1,5 mm, et collée à ladite ou auxdites première(s) feuille(s) de verre par un second intercalaire adhésif, **caractérisée en ce que** ladite seconde feuille de verre est en verre sodocalcique, respectivement en aluminosilicate, renforcés chimiquement, ayant une contrainte de surface comprise entre 200 et 500, respectivement 300 et 1000 MPa, et une profondeur en compression entre 20 et 100 µm dans les deux cas, **en ce que** ledit second intercalaire adhésif a une épaisseur comprise entre 1,25 et 7 mm, est choisi parmi le polyvinylbutyral, le polyuréthane thermoplastique et l'éthylène - acétate de vinyle, **en ce que** lesdits un ou plusieurs premier(s) intercalaire(s) adhésif(s) est(sont) choisi(s) parmi le polyvinylbutyral, le polyuréthane thermoplastique, l'éthylène - acétate de vinyle ou une résine ionomère, comme vitrage de véhicule de transport terrestre, aérien ou aquatique, ou de bâtiment, dont la face formée de ladite seconde feuille de verre est celle qui est orientée vers l'intérieur du véhicule ou du bâtiment, pour ne pas produire de projection d'éclats vulnérants du côté de ladite seconde feuille de verre en cas d'impact du côté du vitrage feuilleté opposé à celle-ci, et pour ne pas produire de fumée du côté de ladite seconde feuille de verre en cas de feu de ce côté du vitrage feuilleté .

2. Utilisation selon la revendication 1, **caractérisée en ce que** ledit second intercalaire adhésif a une épaisseur au plus égale, par ordre de préférence croissant, à 6 et 5 mm.

3. Utilisation selon l'une des revendications précédentes, **caractérisée en ce que** le vitrage feuilleté comprend une seule dite première feuille de verre d'épaisseur au plus égale à 12, de préférence à 10 mm, constituée de verre sodocalcique trempé thermique ou de verre sodocalcique, respectivement d'aluminosilicate renforcés chimiquement ayant une contrainte de surface comprise entre 200 et 500, respectivement 300 et 1000 MPa et une profondeur en compression entre 20 et 100 µm dans les deux cas.

4. Utilisation selon l'une des revendications 1 ou 2, **caractérisée en ce que** le vitrage feuilleté comprend au moins deux dites premières feuilles de verre constituées indépendamment l'une de l'autre de verre sodocalcique trempé thermique, ou renforcé chimiquement ayant une contrainte de surface comprise entre 200 et 500 MPa et une profondeur en compression entre 20 et 100 µm, ou ni l'un ni l'autre, ou d'aluminosilicate renforcé chimiquement ayant une contrainte de surface comprise entre 300 et 1000 MPa et une profondeur en compression entre 20 et 100 µm , ou non renforcé chimiquement.

5. Utilisation selon la revendication 4, **caractérisée en ce que** l'épaisseur desdites premières feuilles de verre est au plus égale à 12 mm.

6. Utilisation selon l'une des revendications 4 ou 5, **caractérisée en ce que** le ou lesdit(s) premier(s) intercalaire(s) adhésif(s) a(ont) une(des) épaisseur(s) comprise(s) entre 0,7 et 8, de préférence au moins égale(s) à 1 et au plus égale(s) à 7 mm.

7. Utilisation selon l'une des revendications précédentes, **caractérisée en ce que** la face orientée vers ladite seconde feuille de verre de l'une au moins desdites deux premières feuilles de verre les plus éloignées de ladite seconde feuille de verre porte une couche chauffante.

8. Utilisation selon l'une des revendications précédentes, comme vitrage aéronautique ou pare-brise de train.

## Patentansprüche

1. Verwendung einer Verbundverglasung, die aus einer bis drei ersten Glasscheibe(n) mit (einer) Dicke(n) zwischen 1,5 und 22 mm, die gegebenenfalls durch eine oder mehrere erste haftende Zwischenlage(n) miteinander verklebt sind, und einer zweiten Glasscheibe besteht, die eine der zwei Flächen der Verbundverglasung ausbildet, mit einer Dicke zwischen 0,5 und 1,5 mm, und mit der oder den ersten Glasscheibe(n) durch eine zweite haftende Zwischenlage verklebt ist, **dadurch gekennzeichnet, dass** die zweite Glasscheibe aus chemisch verstärktem Kalknatron- beziehungsweise Aluminosilicatglas besteht, das eine Oberflächenspannung zwischen 200 und 500 beziehungsweise 300 und 1000 MPa und eine Drucktiefe zwischen 20 und 100 µm in beiden Fällen besitzt, **dass** die zweite haftende Zwischenlage eine Dicke zwischen 1,25 und 7 mm besitzt, aus Polyvinylbutyral, thermoplastischem Polyurethan und Ethylenvinylacetat ausgewählt ist, **dass** die eine oder die mehreren erste(n) haftende(n) Zwischenlage(n) aus Polyvinylbutyral, thermoplastischem Polyurethan, Ethylenvinylacetat oder einem lonomerharz ausgewählt ist/sind, als Verglasung eines Land-, Luft- oder Wassertransportfahrzeugs oder eines Gebäudes, deren Fläche, die aus der zweiten Glasscheibe ausgebildet ist, diejenige ist, die dem Inneren des Fahrzeugs oder des Gebäudes zugewandt ist, um auf der Seite der zweiten Glasscheibe im Falle eines Aufpralls auf der Seite der Verbundverglasung, die dieser gegenüberliegt, kein Schleudern von verletzenden Splittern zu erzeugen, und um auf der Seite der zweiten Glasscheibe im Falle eines Brandes auf dieser Seite der Verbundverglasung keinen Rauch zu erzeugen.

2. Verwendung nach Anspruch 1, **dadurch gekennzeichnet, dass** die zweite haftende Zwischenlage eine Dicke von höchstens gleich, in aufsteigender Reihenfolge, 6 und 5 mm besitzt.

3. Verwendung nach einem der vorstehenden Ansprüche,
**dadurch gekennzeichnet, dass** die Verbundverglasung eine einzige erste Glasscheibe mit einer Dicke von höchstens gleich 12, vorzugsweise 10 mm, umfasst, die aus thermisch vorgespanntem Kalknatronglas oder chemisch verstärktem Kalknatron- beziehungsweise Aluminosilicatglas besteht, das eine Oberflächenspannung zwischen 200 und 500 beziehungsweise 300 und 1000 MPa und eine Drucktiefe zwischen 20 und 100 µm in beiden Fällen besitzt.

4. Verwendung nach einem der Ansprüche 1 oder 2,
**dadurch gekennzeichnet, dass** die Verbundverglasung mindestens zwei erste Glasscheiben umfasst, die unabhängig voneinander aus thermisch vorgespanntem oder chemisch verstärktem Kalknatronglas, das eine Oberflächenspannung zwischen 200 und 500 MPa und eine Drucktiefe zwischen 20 und 100 µm oder keines von beidem besitzt, oder aus chemisch verstärktem Aluminosilicatglas, das eine Oberflächenspannung zwischen 300 und 1000 MPa und eine Drucktiefe zwischen 20 und 100 µm besitzt, oder nicht chemisch verstärktem Aluminosilicatglas bestehen.

5. Verwendung nach Anspruch 4, **dadurch gekennzeichnet, dass** die Dicke der ersten Glasscheiben höchstens gleich 12 mm ist.

6. Verwendung nach einem der Ansprüche 4 oder 5,
**dadurch gekennzeichnet, dass** die erste(n) haftende(n) Zwischenlage(n) (eine) Dicke(n) zwischen 0,7 und 8, vorzugsweise mindestens gleich 1 und höchstens gleich 7 mm aufweist/aufweisen.

7. Verwendung nach einem der vorstehenden Ansprüche,
**dadurch gekennzeichnet, dass** die Fläche, die der zweiten Glasscheibe zugewandt ist, von mindestens einer der zwei ersten Glasscheiben, die am weitesten von der zweiten Glasscheibe entfernt sind, eine Heizschicht trägt.

8. Verwendung nach einem der vorstehenden Ansprüche als Luftfahrtverglasung oder Zugwindschutzscheibe.

## Claims

1. Use of a laminated glazing unit which is composed of one to three first glass sheet(s) of a thickness of between 1.5 and 22 mm, which are, where necessary, bonded to one another by one or more first adhesive interlayer(s), and a second glass sheet which forms one of the two faces of the laminated glazing unit, with a thickness of between 0.5 and 1.5 mm, and which is bonded to the first glass sheet(s) by a second adhesive interlayer, **characterized in that** the second glass sheet is made of soda-lime glass or aluminosilicate which are chemically toughened and have a surface stress of between 200 and 500 or between 300 and 1000 MPa, respectively, and a compression depth of between 20 and 100 µm in both cases, **in that** the second adhesive interlayer has a thickness of between 1.25 and 7 mm, is chosen from polyvinyl butyral, thermoplastic polyurethane and ethylene-vinyl acetate, **in that** the one or more first adhesive interlayer(s) is (are) selected from polyvinyl butyral, thermoplastic polyurethane, ethylene-vinyl acetate or an ionomer resin, as a glazing unit for a land-, air- or water-based transport vehicle or for a building, of which the face formed by the second glass sheet is that which is oriented toward the interior of the vehicle or building, to prevent harmful splinters from being projected from the side of the second glass sheet in the event of an impact to the opposite side of the laminated glazing unit, and to prevent smoke from being produced on the side of the second glass sheet in the event of a fire on this side of the laminated glazing unit.

2. Use according to claim 1, **characterized in that** the second adhesive interlayer has a thickness which is at most equal, in preferably increasing order, to 6 and 5 mm.

3. Use according to one of the preceding claims, **characterized in that** the laminated glazing unit comprises a single first glass sheet with a thickness that is at most equal to 12, preferably 10 mm, consisting of thermally tempered soda-lime glass, or soda-lime glass or aluminosilicate which are chemically toughened and have a surface stress of between 200 and 500 or between 300 and 1000 MPa, respectively, and a compression depth of between 20 and 100 µm in both cases.

4. Use according to one of claims 1 or 2, **characterized in that** the laminated glazing unit comprises at least two of the first glass sheets consisting, independently of one another, of thermally tempered or chemically toughened soda-lime glass which has a surface stress of between 200 and 500 MPa and a compression depth of between 20 and 100 µm, or neither, or of aluminosilicate which is optionally chemically toughened and has a surface stress of between 300 and 1000 MPa and a compression depth of between 20 and 100 µm.

5. Use according to claim 4, **characterized in that** the thickness of the first glass sheets is at most equal to 12 mm.

6. Use according to one of claims 4 or 5, **characterized in that** the first adhesive interlayer(s) has (have) a thickness of between 0.7 and 8, preferably at least equal to 1 and at most equal to 7 mm.

7. Use according to one of the preceding claims, **characterized in that** the face oriented toward the second glass sheet of at least one of the two first glass sheets which are furthest from said second glass sheet has a heating layer.

8. Use according to one of the preceding claims, as an aeronautical glazing unit or a train windshield.
